# EUROPEAN PATENT APPLICATION

(11) **EP 2 955 906 A1**
(43) Date of publication of application: **16.12.2015**
(21) Application number: 14172014.4
(22) Date of filing: 11.06.2014
(51) Int. Cl.: H04M 1/04, A45F 5/00, A45F 5/02, A45C 11/00, H04B 1/38

(54) **Handhold for a mobile device**

(71) Applicant: Obenland, Clemens, 70180 Stuttgart (DE)
(72) Inventor: Obenland, Clemens, 70180 Stuttgart (DE)
(74) Representative: Meyer zu Bexten, Elmar

(57) **Abstract**

The present invention is concerned with the problem of facilitating the one-handed hold of a mobile device while freeing the user's remaining hand or other fingers for operating its touch screen or miniature keyboard.

Solution

A handhold (10) for a mobile device (12) having an essentially flat back surface (14), the handhold (10) comprising an elongate pressure-sensitive tape (16) with a non-adhesive face and an adhesive face for adhering to the surface (14), the tape (16) comprising a plurality of lateral protrusions (18) protruding perpendicularly from the non-adhesive face and spaced lengthways along the tape (16) such as to receive a human finger between two adjacent protrusions (18).

## Description

### Technical Field

The invention relates to a handhold for a mobile device according to the preamble of claim 1. The invention further relates to a process specially adapted for the manufacture of the said product and to a use thereof.

### Background Art

A mobile device, handheld computer, or handheld is a small computing device typically having a display screen with touch input or a miniature keyboard. A state-of-the-art mobile device comprises an operating system (OS), being able to execute various types of application software which are currently referred to as apps. Advanced mobile devices may further be equipped with Wi-Fi, Bluetooth, and GPS capabilities and allow connections to the Internet and other Bluetooth-capable devices such as automobile or microphone headsets. A camera or media player feature for video or music files can also be typically found on these devices along with a stable battery power source such as a lithium battery.

As mobile devices become bigger, they are more difficult to handle, particularly for the young, elderly, or handicapped such as those suffering from arthritis. They are also difficult to use one-handed due to the limited length of the human thumb.

US 20130052956A1 (JAMES W. MCKELL) 28.02.2013 discloses, referring to the embodiment according to claim 3, a mobile phone docking system comprising a mobile dock constructed of a compressible material, adapted to be held to an ear, and having a slot adapted to receive the mobile phone. Further to the mobile dock, the system disclosed comprises a means for releasably holding the mobile phone in said mobile dock and a retractable flap, wherein a first edge of said retractable flap is hingedly secured to said mobile dock and a second edge of said retractable flap is secured to said mobile dock by a means for securably fastening, wherein said flap is constructed in part or in whole of shielding materials.

### Summary of invention

The invention aims to provide an improved handhold for a mobile device, a process for the manufacture of such handhold, and a use of the same.

### Technical Problem

The present invention is concerned with the problem of facilitating the one-handed hold of a mobile device while freeing the user's thumb and other hand for operating its touch screen or miniature keyboard.

### Solution to Problem

The problem is solved by means of a handhold according to Claim 1, a process of manufacture according to Claim 14, and a method according to Claim 15.

### Advantageous effect of invention

First and foremost, the proposed approach allows a user to hold a mobile device such as a smartphone or tablet PC one-handed while still being able to operate an integrated touch screen or keyboard.

In the embodiment of Claim 3, a hinged mount allows the protrusions accommodating the user's fingers to nestle flat against the device's back surface, thus enabling the user to insert the device into a conventional shield casing, sleeve, or other type of protective cover.

The subject matter of Claim 7 allows for an aesthetically pleasing effect, hence optimizing the handhold for use as a promotional article or business gift.

Such use may also be facilitated by means of a dispenser according to Claim 13, allowing for an effective distribution at minimal unit cost.

These and other features of the present invention will become readily apparent upon further review of the following specification and drawings.

### Brief description of drawings

Figure 1 is a perspective view of a handhold according to a first embodiment of the invention.
Figure 2 is a perspective view of a handhold according to a second embodiment of the invention.
Figure 3 is a perspective view of a handhold according to a third embodiment of the invention.
Figure 4 is a perspective view of a handhold according to a forth embodiment of the invention.

### Description of embodiments

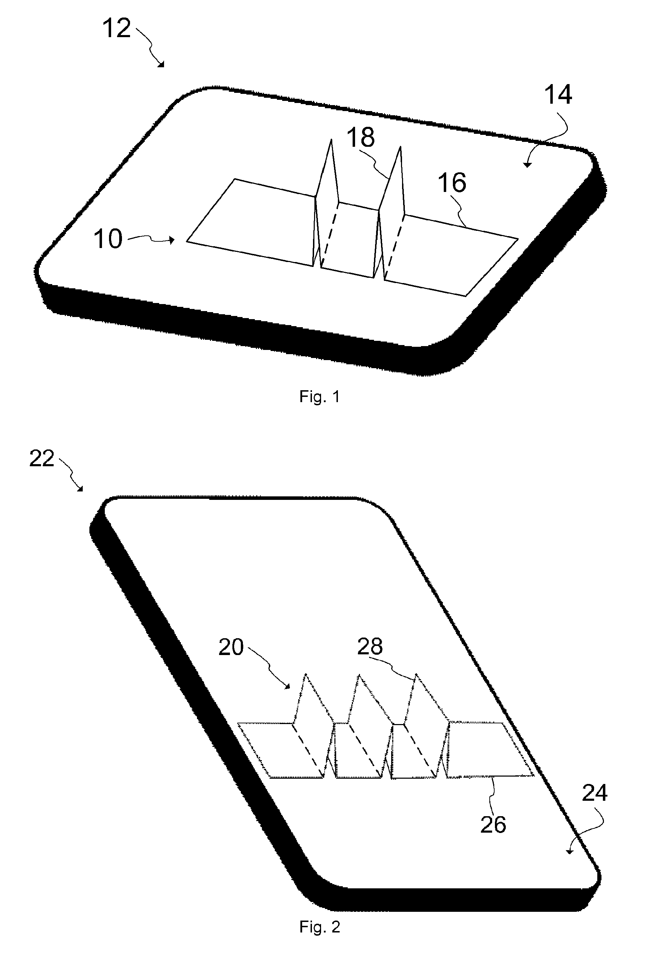

Figure 1 illustrates a first embodiment of the invention for use with a mobile device in the form of a conventional smartphone 12. The simplified bottom view of Figure 1 is directed to the phone's essentially flat back surface 14 to which a handhold 10 is already attached. The handhold 10 essentially consists of an elongate, essentially straight, and flexible, preferably pressure-sensitive tape 16 of variable width based on a backing material containing paper, plastic film, cloth, leather, or metal foil. To ensure for its removability from the smartphone 12, the tape's adhesive face is coated with a non-permanent adhesive originally covered by means of a release liner (not depicted).

Protruding perpendicularly from its non-adhesive face, two parallel protrusions 18 in the form of crimps or flaps have been formed integrally with the tape 16 in the latter's lateral direction. To accommodate a user's middle finger (not depicted) between them, the protrusions 18 are spaced lengthways along the tape 16 at a distance exceeding the width of a typical adult's proximal phalange or metacarpal, thus amounting to an interval of at least 2 cm.

The outlined geometry allows the user to align her hand perpendicularly across the non-adhesive face, pinch or clamp the protrusion 18 between her middle and ring or index finger, and maintain the pinch conveniently while handling a touch screen or miniature keyboard integrated into the phone's front surface (not depicted). An alternative embodiment may make use of a configuration optimized for a different set of fingers.

Upon the user releasing her pinch, the flexibility of the tape 16 allows the protrusions 18 to hinge down to the surface 14, effectively folding into the latter's plane. In its laminar resting position, the handhold 10 thus may be securely stored in any type of casing designed for the phone's original form factor. Also, the device may be placed face-up on a flat surface such as a desktop.

Figure 2 elucidates a second embodiment of the invention. In this case, a handhold 20 is applied to a tablet personal computer 22 instead of the smartphone 12 of Figure 1. To reflect the larger dimensions and higher weight of the tablet personal computer 22, the tape 26 of the handhold 20 comprises three protrusions 28 instead of two, sized and spaced such as to accommodate a user's middle finger as well as her ring finger. An alternative embodiment may employ an increased or reduced number of protrusions 28 without leaving the scope of the present invention.

In its preferred, purely tape-based design, a vast number of handholds 10, 20 according to the invention may be rolled up and mounted in a revolving dispenser. In this scenario, the handholds 10, 20 would share a continuous roll of tape 16, 26, allowing for them to be separated simply by severing the tape 16, 26 between two adjacent handholds 10, 20, for which case a shear would be aligned radially to the roll. Also, the non-adhesive face may be printed to accommodate a logo or other commercial art to be displayed.

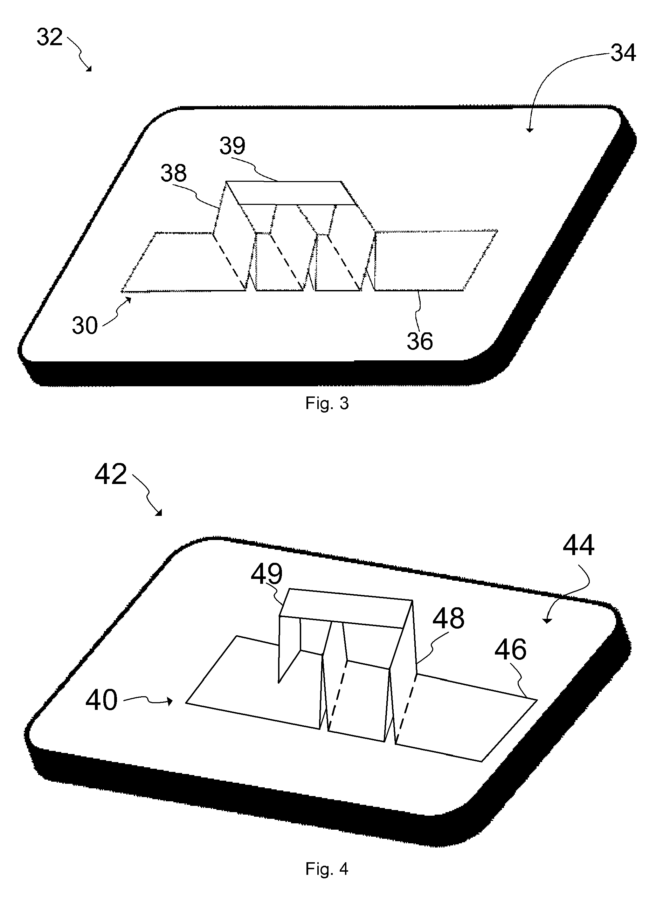

Figure 3 and Figure 4 each pertain to an alternative embodiment of the invention which is characterized by an added bridge 39, 49 crossing some or all of the protrusions 38, 48. To allow for the handholds 30, 40 to be conveniently unfolded from their laminar resting positions, the respective bridges 39, 49 fall short of the maximum width of the tape 36, 46. Such configuration further simplifies the act of threading one's finger or fingers through the protrusions 38, 48 while applying minimum attention and motoric skill. As Figure 4 illustrates, the bridge 49 may extend unilaterally beyond the last protrusion 48 and attach to the base of the tape 46.

### Industrial applicability

The present invention is applicable, inter alia, throughout the advertising, appliance, entertainment, office, telecommunications, and user industries. Reference signs list

The following reference characters denote corresponding features consistently throughout the attached drawings:
- 10: Handhold
- 12: Smartphone
- 14: Back surface
- 16: Pressure-sensitive tape
- 18: Protrusion
- 20: Handhold
- 22: Tablet personal computer
- 24: Back surface
- 26: Pressure-sensitive tape
- 28: Protrusion
- 30: Handhold
- 32: Tablet personal computer
- 34: Back surface
- 36: Pressure-sensitive tape
- 38: Protrusion
- 39: Bridge
- 40: Handhold
- 42: Smartphone
- 44: Back surface
- 46: Pressure-sensitive tape
- 48: Protrusion
- 49: Bridge

### Citation list

Reference is made to the following prior art:

### Patent literature

US 20130052956A1 (JAMES W. MCKELL) 28.02.2013

## Claims

1. Handhold (10, 20, 30, 40) for a mobile device (12, 22, 32, 42) having an essentially flat back surface (14, 24, 34, 44), **characterized in** an elongate pressure-sensitive tape (16, 26, 36, 46) with a non-adhesive face and an adhesive face for adhering to the surface (14, 24, 34, 44), the tape (16, 26, 36, 46) comprising a plurality of lateral protrusions (18, 28, 38, 48) protruding perpendicularly from the non-adhesive face and spaced lengthways along the tape (16, 26, 36, 46) such as to receive a human finger between two adjacent protrusions (18, 28, 38, 48).

2. Handhold (10, 20, 30, 40) according to Claim 1 wherein the tape (16, 26, 36, 46) is essentially straight and the protrusions (18, 28, 38, 48) are mutually parallel.

3. Handhold (10, 20, 30, 40) according to Claim 2 wherein the protrusions (18, 28, 38, 48) are hinged to the tape (16, 26, 36, 46).

4. Handhold (10, 20, 30, 40) according to Claim 3 wherein the tape (16, 26, 36, 46) is flexible and the protrusions (18, 28, 38, 48) are formed integrally with the tape (16, 26, 36, 46), each protrusion (18, 28, 38, 48) taking the form of a crimp in the tape (16, 26, 36, 46).

5. Handhold (10, 20, 30, 40) according to any of the preceding claims wherein the tape (16, 26, 36, 46) comprises two protrusions (18, 28, 38, 48) adapted for receiving between them a human middle finger.

6. Handhold (10, 20, 30, 40) according to any of the preceding claims wherein the tape (16, 26, 36, 46) comprises three protrusions (18, 28, 38, 48) adapted for receiving between them a human middle finger and a human ring finger.

7. Handhold (10, 20, 30, 40) according to any of the preceding claims wherein the non-adhesive face is printed.

8. Handhold (10, 20, 30, 40) according to any of the preceding claims wherein the adhesive face is coated with a non-permanent adhesive such that the tape (16, 26, 36, 46) is removable when adhering to the surface (14, 24, 34, 44).

9. Handhold (10, 20, 30, 40) according to Claim 8 wherein the tape (16, 26, 36, 46) comprises a release liner on the adhesive face for covering the adhesive.

10. Handhold (10, 20, 30, 40) according to any of the preceding claims wherein the protrusions (18, 28, 38, 48) are approximately equidistant.

11. Handhold (10, 20, 30, 40) according to any of the preceding claims wherein the tape (16, 26, 36, 46) comprises a backing material containing paper, plastic film, cloth, leather, or metal foil.

12. Mobile device (12, 22, 32, 42) having an essentially flat back surface (14, 24, 34, 44) and a handhold (10, 20, 30, 40) according to any of the preceding claims adherent to the surface (14, 24, 34, 44).

13. Dispenser comprising a rotatable roll of handholds (10, 20, 30, 40) according to any of Claim 1 to Claim 11 and a shear aligned radially to the roll for separating the handholds (10, 20, 30, 40), wherein the handholds (10, 20, 30, 40) share a continuous tape (16, 26, 36, 46) and are separable by severing the tape between two adjacent handholds (10, 20, 30, 40).

14. Process for manufacturing a handhold (10, 20, 30, 40) according to any of Claim 1 to Claim 11, **characterized in** the forming of a plurality of lateral protrusions (18, 28, 38, 48) integrally within an elongate, essentially straight, and flexible pressure-sensitive tape (16, 26, 36, 46) by crimping the tape (16, 26, 36, 46) such that the protrusions (18, 28, 38, 48) protrude perpendicularly from a non-adhesive face of the tape (16, 26, 36, 46), wherein two adjacent protrusions (18, 28, 38, 48) are spaced lengthways along the tape (16, 26, 36, 46) such as to receive a human finger between them.

15. Method of holding a mobile device (12, 22, 32, 42) having an essentially flat back surface (14, 24, 34, 44), **characterized in** the steps of attaching a handhold (10, 20, 30, 40) according to any of Claim 1 to Claim 11 to the surface (14, 24, 34, 44) by means of the adhesive face, aligning a hand perpendicularly across the non-adhesive face, and pinching at least one of the protrusions (18, 28, 38, 48) between two adjacent fingers of the hand.
